# FASCICULE DE BREVET EUROPEEN

(11) **EP 3 469 290 B1**
(45) Date de publication et mention de la délivrance du brevet: **30.12.2020**
(21) Numéro de dépôt: 17735201.0
(22) Date de dépôt: 09.06.2017
(51) Int. Cl.: F28D 20/02

(54) **DISPOSITIF DE CENTRAGE DANS UN CONDUIT**
VORRICHTUNG ZUR ZENTRIERUNG IN EINEM ROHR
DEVICE FOR CENTRING IN A PIPE

(30) Priorité: 10.06.2016 FR 1655391
(43) Date de publication de la demande: 17.04.2019
(73) Titulaire: Hutchinson, 75008 Paris (FR)
(72) Inventeur: CHOPARD, Fabrice, 38400 Saint Martin d'Heres (FR); CHAUVET, Boris, 45210 Ferrieres (FR); LEBORGNE, Mathieu, 74500 Évian-les-Bains (FR)
(74) Mandataire: Ernest Gutmann - Yves Plasseraud S.A.S.
(86) Numéro de dépôt international: PCT/FR2017/051483
(87) Numéro de publication internationale: WO 2017/212199

(56) Documents cités:
- EP-A1- 2 727 646
- WO-A1-2015/164628
- DE-A1-102011 004 202
- GB-A- 2 267 962
- US-A- 2 525 261
- US-A- 4 205 656
- US-A1- 2006 123 832

## Description

La présente invention concerne le domaine de la gestion thermique.

Sont concernés en particulier :
- un ensemble comprenant un conduit de circulation de fluide plusieurs dispositifs d'échange thermique et de positionnement dans un volume, disposés dedans,
- un conduit de circulation de fluide intégrant, dans sa paroi (donc fabriqué avec) plusieurs tels dispositifs,
- et un procédé de gestion thermique dans un tel conduit. Plus particulièrement, l'invention se rapporte à un ensemble pour la circulation et l'échange de chaleur avec un fluide tel que défini dans le préambule de la revendication 1, et tel que divulgué par le document GB 2 267 962 A.

Dans un volume, il arrive qu'un fluide qui y circule soit à un moment porteur d'une d'énergie thermique qui, si on la stocke alors, pourra être restituée plus tard, dans ce volume, par exemple au même fluide qui pourra alors avoir à y circuler à une autre température, et donc pouvoir y bénéficier de cette restitution (au moins partielle) d'énergie thermique.

Ainsi, par exemple, dans un véhicule automobile, l'huile moteur est très chaude quand le moteur propulsif fonctionne depuis un moment. Il peut alors être utile de stocker une partie de cette énergie thermique. Par contre, lors d'un démarrage à froid du moteur, réchauffer l'huile moteur serait utile pour la performance du moteur et limiter les rejets polluants.

Outre la manière de procéder pour stocker puis restituer plus tard une énergie thermique, un problème se pose aussi pour assurer cette fonction au mieux, avec un rendement suffisant, sans perturber excessivement l'écoulement du fluide dans le volume concerné.

Aussi est-il proposé un ensemble pour la circulation et l'échange thermique avec un fluide, conforme à la revendication 1.

De plus, il est proposé un ensemble pour la circulation et l'échange thermique avec un dit fluide selon la revendication 1, dans lequel le conduit est localement séparé en plusieurs branches dans lesquelles circule en parallèle le fluide.

Ainsi, on pourra maintenir un débit élevé même avec plusieurs dispositifs à la suite, les dispositifs étant disposés dans les branches, entourés par leur paroi. Et les dispositifs d'échange thermique occupent une part majeure de la section du conduite, d'où une efficacité importante en termes d'échange thermique.

On aura compris que le conduit considéré pourra en particulier être une durite ou l'un des nombreux tuyaux souples qui parcourent un véhicule.

Pour, dans chaque dispositif d'échange, favoriser un volume important de matériau de stockage d'énergie thermique, il est proposé que lesdits dispositifs définissent un chapelet de tels dispositifs se suivant dans le volume et dont les structures de positionnement du corps central viendront alors au contact de la paroi du conduit.

En tenant compte des formes du volume, et notamment de coudes dans un conduit sensiblement cylindrique de section circulaire, pouvant y altérer un positionnement qui serait adapté à une configuration rectiligne par exemple, il est par ailleurs proposé que la structure de positionnement comprenne une structure extérieure :
- définissant (sensiblement ou globalement) un cylindre,
- et liée par des bras transversaux au corps central.

Dans un conduit (sensiblement ou globalement) cylindrique de section circulaire, on pourra se satisfaire d'une structure de positionnement comprenant une structure extérieure définissant un anneau et liée par des bras transversaux au corps central.

Un avantage sera de pouvoir réduire l'intervalle entre deux corps centraux de deux dispositifs adjacents ou successifs dans le volume, puisque la structure de positionnement ne s'étendra alors que (sensiblement) dans un plan. Hors ce plan, deux dispositifs adjacents pourront se succéder, au contact.

Et pour tenir compte des difficultés précitées de positionnement en cas de coudes ou de méandres dans un conduit comme ci-avant, c'est un ensemble comprenant plusieurs dispositifs liés entre eux par un lien souple, et notamment avec donc une succession de structures extérieures définissant chacune un anneau, que l'on propose d'utiliser.

En agissant sur le lien, on pourra agir sur les anneaux échelonnés dans le conduit et les orienter dans ce dernier.

Pour un auto-positionnement, quelle que soit la forme du volume considéré, et une circulation environnante du fluide qui soit aussi indépendante de la position du dispositif dans le volume, il est proposé que la structure de positionnement comprenne une structure extérieure :
- définissant une sphère discontinue (présentant des ouvertures de passage et de circulation du fluide),
- et liée par des bras transversaux au corps central.

Si la structure de positionnement d'un diamètre d'environ 2cm est liée à un corps central d'environ 1cm d'un diamètre par une quinzaine de tiges rectilignes ayant une section de dimension filamentaire (donc de l'ordre du mm) et que la sphère discontinue est également réalisée par des tiges rectilignes mais incurvées, on pourra associer solidité, performance énergétique et respect d'une circulation sans excès de perte de charge.

De préférence, le corps central se présentera comme une sphère ou sera profilé. La sphère est omnidirectionnelle.

Dans les réalisations à structures extérieures qui précèdent, ces dernières seront a priori radialement éloignées du corps central. Ceci est typiquement favorable dans un conduit où les bras transversaux assureront juste une liaison mécanique radiale avec le corps central en s'opposant peu à la circulation du fluide.

Dans un autre cas de figure, on pourrait devoir privilégier le nombre de dispositifs au cm2, en augmentant la surface d'échange, sans augmenter le volume extérieur du dispositif, afin d'obtenir un maximum d'échange thermique.

Favorablement, chaque corps central pourra alors se présenter comme une sphère, pour être facile à utiliser et à répartir, avec un minimum d'espace mort.

Quant à la structure de positionnement, elle se pourra se présenter favorablement, en entourant le corps central, à son contact:
- comme une structure alvéolaire,
- ou comme un ou plusieurs bourrelets linéaires (allongés à la manière d'une bande) entourant le corps central,
- ou comme des creux formés dans la surface extérieure dudit corps.

De la sorte, d'une part on augmentera la surface d'échange entre le corps et le fluide environnant venant à son contact, et d'autre part on favorisera le passage de ce fluide, suivant le cas entre les bourrelets ou dans les alvéoles, ou dans lesdits creux qui définiront alors des canaux naturels de passage fluide.

Favorablement, le dispositif produit pourra être un moulage monobloc intégrant la structure de positionnement et le corps central contenant donc le matériau de stockage d'énergie thermique.

Et ce matériau comprendra favorablement au moins un MCP (matériau à changement de phase) permettant une performance énergétique élevée.

Concernant encore l'utilisation du dispositif, on, notera un intérêt à ce que l'on réalise directement un conduit de circulation du fluide, de manière que celui-ci intègre, de façon monobloc, plusieurs dits dispositifs ayant tout ou partie des caractéristiques précitées, avec des structures extérieures des dispositifs :
- qui sont chacune pleines pour définir chacune une portion de paroi du conduit,
- et sont liées entre elles de façon étanche au fluide.

Favorablement, la structure de positionnement comprendra une structure extérieure définissant un cylindre et liée par des bras transversaux au corps central, les structures extérieures des dispositifs. Dans ce cas, lesdits dispositifs utilisés auront comme deuxième fonction de servir de paroi canalisante, à la place de la paroi du conduit, via leurs structures extérieures successives.

Ainsi, on pourra réunir les fonctions, sans nécessité d'un conduit supplémentaire extérieur.

A toute fin, il est confirmé qu'un matériau à changement de phase - ou MCP ; PCM en anglais - désigne un matériau capable de changer d'état physique, par exemple entre liquide et solide, dans une plage de température comprise par exemple entre -50°C et 180°C. Le transfert de chaleur (ou transfert thermique) s'opère par utilisation de sa Chaleur Latente : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple » comme de la laine de verre, mais on préfèrera certainement une mousse, par exemple de polyuréthane ou de polyisocyanurate.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- les figures 1,2,3 schématisent trois premiers exemples où une structure de positionnement assure un centrage axial d'un corps central dans un volume,
- la figure 4 schématise en vue par transparence la solution du dispositif de la figure 2 en place en chapelet dans un conduit,
- la figure 5 schématise un ensemble de dispositifs selon la figure 3 en place dans un autre conduit,
- les figures 6,7,8 schématisent (en coupe et en volume) trois autres exemples où une structure de positionnement assure un écartement permettant une circulation de fluide entre les dispositifs illustrés en place dans un volume,
- la figure 9 schématise une réalisation de conduit à fonction d'échange thermique et à double branche permettant une préservation de débit,
- la figure 10 schématise, avec arrachement, une version de conduit à dispositifs d'échange thermique et de positionnement intégrés.

Plusieurs configurations de dispositif 1 d'échange thermique et de positionnement dans un volume 3 peuvent donc être imaginées.

Systématiquement, le dispositif 1 comprendra :
- un corps central 5 contenant un matériau 7 de stockage d'énergie thermique par accumulation de chaleur latente, à placer en échange thermique avec un fluide 9 environnant circulant, et
- une structure 11 de positionnement du corps central dans le volume 3, la structure 11 de positionnement étant liée au corps central 5, autour duquel elle s'étend donc, et réservant des passages 13 permettant un contact fluidique entre le corps central 5 et le fluide environnant 9, avec une circulation maintenue dudit fluide.

Sur les trois premiers exemples préférés ci-après, la structure 11 de positionnement assurera favorablement un centrage axial du corps central 5 dans le volume, dès lors qu'il s'agit d'un positionnement dans un conduit 15, donc dans un moyen tubulaire. La structure de positionnement 11 réservera les passages 13 entre elle et le corps central 5, transversalement ou radialement à l'axe général 15a du conduit 15. Et c'est par cette structure 11 de positionnement que se réalise le contact du dispositif 1 avec la paroi 31 du conduit 15.

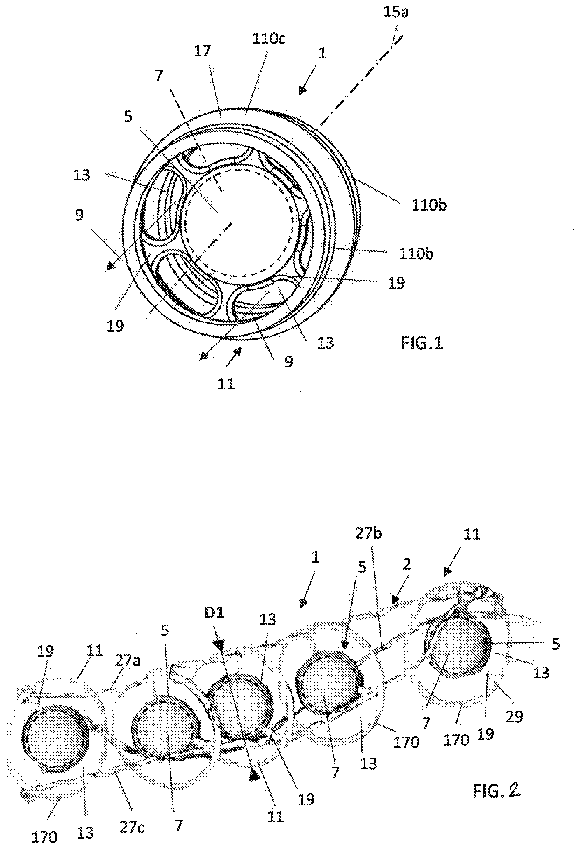

Dans le premier exemple, tel que schématisé figure 1, la structure 11 de positionnement comprend une structure extérieure 17 définissant (sensiblement ou globalement) un cylindre, à orienter suivant l'axe 15a, et liée par des bras 19 transversaux au corps central 5.

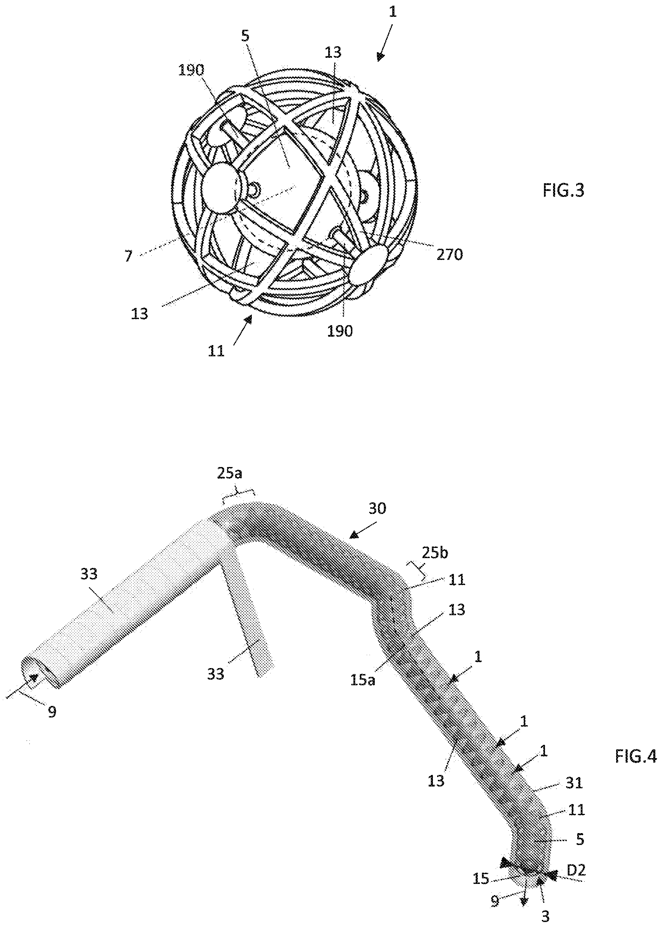

Avec cette structure extérieure creuse 17 et de fins bras un auto-centrage axial, par exemple dans le conduit 15 de la figure 4 sera aisé et pertinent, en prévoyant alors une orientation du cylindre 17 suivant l'axe 15a.

Comme dans les réalisations qui suivent, le corps 5 se présente ici comme une sphère. Mais il peut être profilé en obus, pour limiter encore davantage les pertes de charges, avec un volume réservé au matériau 7 qui pourra demeurer identique.

Le cylindre 17 pourra ne pas être plein, mais formé par des branches ou des lignes définissant une telle enveloppe cylindrique, mais avec des passages à travers pour l'alléger.

Dans le deuxième exemple, tel que schématisé figure 2, la structure 11 de positionnement comprend une structure extérieure 170 définissant un anneau et liée de nouveau par des bras 19 transversaux, ou radiaux, au corps central 5.

Dans le troisième exemple, tel que schématisé figure 3, la structure 11 de positionnement comprend une structure extérieure 270 définissant une sphère discontinue et liée par des bras transversaux ou radiaux 190 au corps central 5 contenant la matière 7.

Les premier et troisième exemples sont des solutions auto-centrantes dans un conduit, voire dans un volume 3 qui serait formé par l'intérieur creux 21 d'un boîtier.

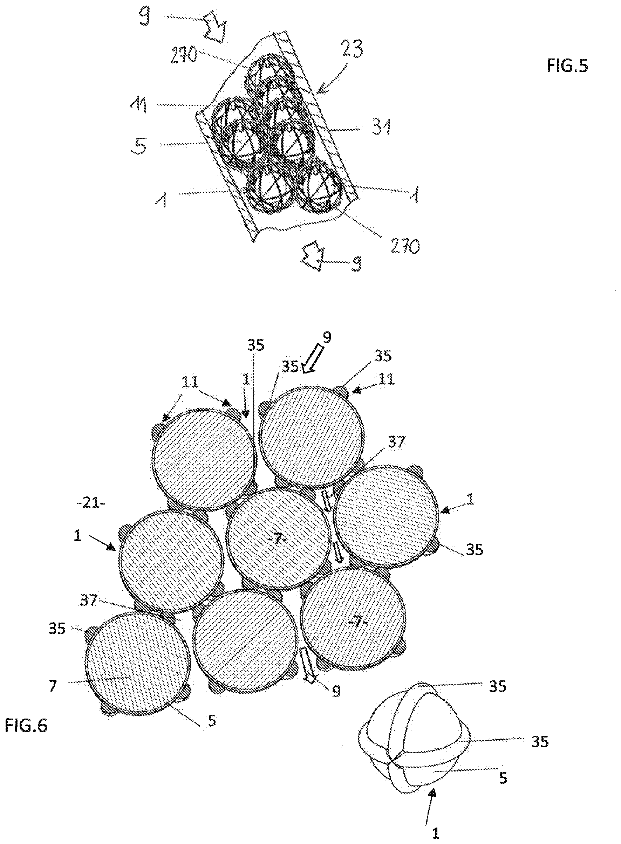

Sur la figure 5, on a représenté une partie d'un autre conduit 23 (telle une durite) à paroi 31 présentant toujours une entrée et une sortie pour le fluide 9 (flèches) et contenant ici une multitude de dispositifs 1 conformes à ceux du troisième exemple. Dans le conduit, il pourrait y avoir plusieurs dispositifs 1 de front, se touchant; le fluide circulant grâce aux passages 13 successifs.

Dans tous les exemples de réalisation présentée dans cette description, le matériau 7 pourra être constitué par au moins un MCP.

Il pourra par exemple s'agir de MCP encapsulés (typiquement micro-encapsulés) dans une matrice poreuse, à pores ouverts, de préférence de type élastomère, telle qu'à base de silicone, de NBR ou HNBR. Pour chaque corps 5, on pourra prévoir une composition de caoutchouc telle que décrite dans EP2690137 ou dans EP2690141.

Le matériau 7 pourrait aussi être à base de paraffine, d'acide gras eutectique (myristique-caprique) ou de sel hydraté eutectique (chlorure de calcium + potassium). D'autres possibilités existent encore pour chaque corps 5, comme un MCP imprégné dans un réseau poreux.

On notera quoi qu'il en soit que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

Dans le deuxième exemple tel que schématisé figure 2, on notera encore que, même si par exemple la figure 4 montre un chapelet de dispositifs 1 ayant chacun un diamètre extérieur D1 de structure 11 de positionnement sensiblement égal, ou juste inférieur, au diamètre intérieur D2 de la paroi 31 du conduit 15 pour y passer librement, il pourra y avoir des problèmes au passage des coudes comme en zones 25a,25b.

Aussi est-il proposé de lier entre eux une série de plusieurs dispositifs 1 disposés en ligne ou chapelet, comme schématisé figure 2, par un lien souple 27 permettant d'orienter depuis l'extérieur du conduit 15 certains au moins des anneaux 170 de façon à les rapprocher d'une position où ces anneaux sont dans un plan radial à l'axe 15a local du conduit.

Le lien souple 27 pourra comprendre trois brins filamentaires passant à travers trois orifices (tel que celui repéré 29) ménagés chacun dans un bras 19, à proximité de l'anneau 170 considéré.

Une sur-longueur des brins filamentaires permettra de les manœuvrer à distance, un fois le chapelet glissé dans le conduit 15.

Dans le mode de réalisation de l'ensemble 30 pour la circulation et l'échange thermique avec le fluide 9 illustré figure 4, on remarquera aussi que la paroi pleine 31 qui définit le conduit 15 est entourée par un isolant thermique 33 qui va favoriser la gestion thermique à l'endroit de ce conduit, avec les dispositifs 1 disposés dedans. Il pourrait en être de même dans le cas de la figure 5 où les dispositifs 1 ne sont pas tous en ligne les uns derrière les autres.

Dans le cas des exemples des figures 3 et 5 et suivantes, il s'agit de solutions auto-centrantes de façon omnidirectionnelle, dans un conduit.

Dans l'exemple tel que schématisé figure 6, la structure de positionnement 11 de chaque dispositif 1 se présente comme plusieurs bourrelets 35 entourant le corps central 5 contenant le matériau 7 de stockage d'énergie thermique par accumulation de chaleur latente.

Les bourrelets 35 peuvent définir au moins deux bandes qui se croisent pour maintenir par leur intermédiaire un espace libre 37 entre plusieurs dispositifs 1, chacun ayant ici une forme sphérique, afin que, placées dans l'intérieur creux 21, ces formes 1 s'y accumulent en nombre le plus élevé possible, sans perte de place, tout en permettant au fluide 9 de circuler en échange thermique, entre eux.

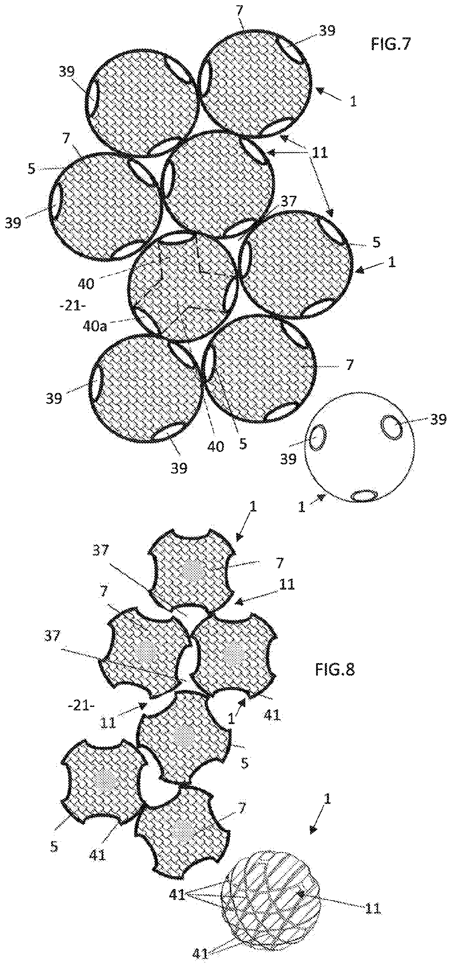

Le même commentaire peut s'appliquer aux exemples des figures 7,8 où, respectivement, la structure 11 de positionnement se présente :
- comme des creux 39 formés dans ledit corps 5,
- et comme une structure alvéolaire 41 entourant le corps central 5, à son contact.

On retrouvera les espaces libres 37 entre les dispositifs 1 placés dans l'intérieur creux 21, chacun ayant ici une forme générale sphérique.

Les creux 39 formeront des cavités borgnes, par exemple chacune en portion de sphère.

Dans les deux cas, le corps central 5 s'étendra au fond desdits creux et alvéoles, voire entre eux.

La structure alvéolaire 41 sera aussi ouverte sur l'extérieur.

Pour la réalisation de l'une quelconque de ces structures, on pourra préférer utiliser un moulage monobloc entre la structure de positionnement 11 et le corps 5. En référence à ce qui précède, le corps central 5 pourra donc être une matrice poreuse, à pores ouverts, par exemple de type élastomère.

En termes de coefficient d'échange thermique à diamètre comparable, la solution de la figure 8 est la plus performante, puis celle de la figure 7, puis celle de la figure 6.

A noter que la figure 7 schématise aussi en pointillés une alternative aux creux 39, à savoir des orifices 40 traversant totalement le corps 5, les lèvres 40a de ces orifices qui débouchent sur l'extérieur (et qui s'étendent autour du corps central, localement) ayant peu de risque d'être bouchées par une partie de paroi pleine d'un autre dispositif 1, ici sphérique. Les orifices 40 définiront les passages précités où passe le fluide environnant.

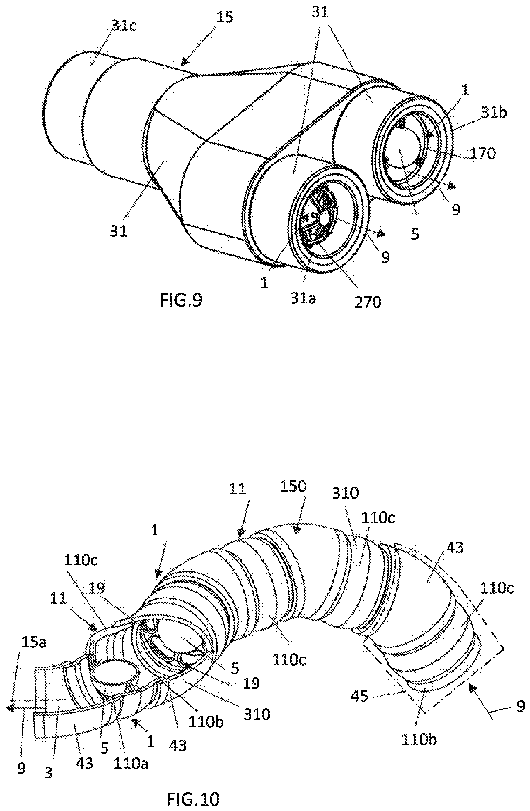

Encore un autre exemple de réalisation est schématisé figure 9.

Il s'agit de nouveau d'un ensemble pour la circulation et l'échange thermique avec un fluide, cet ensemble comprenant :
- un conduit 15 de circulation du fluide, le conduit comprenant une paroi 31 et étant localement séparé en plusieurs branches 31a,31b dans lesquelles circule en parallèle le fluide 9 provenant de la partie amont 31c du conduit,
- et plusieurs dispositifs 1, ces dispositifs étant disposés dans lesdites branches, par exemple en chapelet, entourés par leur paroi commune 31.

Un autre cas de figure a également été prévu qui est schématisé figure 10 où le conduit 150 de circulation du fluide 9 comprend, et de fait intègre, un chapelet de plusieurs dispositifs 1 disposés en série, avec donc ses structures extérieures 11 qui sont chacune pleines pour définir chacune une portion de la paroi 310 du conduit et sont liées entre elles de façon étanche au fluide.

Ainsi, c'est une structure monobloc à laquelle on a ici affaire.

Les dispositifs 1 du chapelet se succèdent axialement (axe 15a). Il s'agit individuellement de la solution de la figure 1, avec la structure extérieure qui définit un cylindre orienté suivant l'axe 15a, et liée par des bras 19 transversaux au corps central 5. Ces tronçons de cylindre forment chacun une portion de la paroi cylindrique 310 du conduit 150.

La structure extérieure 11 de chaque dispositif 1 pourra présenter deux embouts cylindriques 110a,110b raccordés axialement par une partie intermédiaire 110c qui, bien que sensiblement ou globalement cylindrique, sera bombée vers l'extérieur ou l'intérieur pour former un butée d'arrêt axial vis-à-vis de l'inter-engagement avec soit des dispositifs 1 adjacents, soit des raccords tubulaires 43 interposés axialement entre deux dispositifs 1 successifs et définissant comme eux (avec les structures 11), une portion de la paroi globalement cylindrique 310 du conduit 150.

Un tel montage modulaire sera pratique d'emploi et pourra permettre de créer des conduits de formes diverses, d'autant plus si les liaisons via les embouts 110a,110b sont des emboîtements laissant libre un pivotement relatif, avec des raccords tubulaires 43 pour certains coudés (voir illustration figure 10).

Eventuellement, ladite paroi globalement cylindrique 310 pourrait être entourée par une autre paroi, 45, fine, flexible, en matière plastique souple à laquelle la paroi 310 donnera sa forme.

## Revendications

1. Ensemble pour la circulation et l'échange thermique avec un fluide (9), l'ensemble comprenant :
- un conduit (15) présentant un volume intérieur (3) de circulation du fluide, dans lequel le fluide peut circuler, entre une entrée et une sortie, le conduit comprenant une paroi (31),
- plusieurs dispositifs (1) d'échange thermique et de positionnement dans ledit volume (3), chaque dispositif étant disposé dans ledit conduit entouré par sa paroi (31) et contenant un matériau (7) de stockage d'énergie thermique par accumulation de chaleur latente, à placer en échange thermique avec le fluide (9) environnant circulant, certains au moins desdits dispositifs (1) d'échange thermique pouvant venir au contact de la paroi (31) du conduit (15),
**caractérisé en ce que** chaque dispositif (1) comprend :
- un corps central (5) contenant ledit matériau (7) de stockage d'énergie thermique par accumulation de chaleur latente, et
- une structure (11;35,39,41) de positionnement du corps central dans le volume (3), la structure de positionnement étant liée au corps central autour duquel elle s'étend:
-- en réservant des passages (13,37,40) permettant un contact entre le corps central (5) et le fluide (9),
-- et en assurant un écartement permettant la circulation du fluide entre les dispositifs.

2. Ensemble pour la circulation et l'échange thermique avec un fluide selon la revendication 1 dans lequel le conduit est localement séparé en plusieurs branches (31a,31b) dans lesquelles circule en parallèle le fluide, les dispositifs étant disposés dans lesdites branches entourées par leur paroi.

3. Ensemble selon la revendication 1 ou 2, où le conduit (15) est une durite ou l'un des tuyaux souples qui parcourent un véhicule.

4. Ensemble selon l'une quelconque des revendications 1 à 3, où les dispositifs (1) d'échange thermique et de positionnement dans ledit volume (3) définissent un chapelet de tels dispositifs (1) qui se suivent dans le volume et dont les structures (11) de positionnement du corps central viennent au contact de la paroi (31).

5. Ensemble selon l'une quelconque des revendications précédentes, où la(chaque) structure (11) de positionnement comprend une structure extérieure (17) définissant un cylindre (17) et liée par des bras (19) transversaux au corps central (5).

6. Ensemble selon la revendication 5, où les structures extérieures (17) sont chacune pleines, pour définir chacune une portion de paroi (310) du conduit, et sont liées entre elles de façon étanche au fluide.

7. Ensemble selon l'une quelconque des revendications 1 à 4, où la structure (11) de positionnement comprend une structure extérieure (170) définissant un anneau et liée par des bras (19) transversaux au corps central (5).

8. Ensemble selon l'une quelconque des revendications 1 à 4, où la structure (11) de positionnement comprend une structure extérieure (270) :
- définissant une sphère discontinue (13),
- et liée par des bras transversaux (190) au corps central (5).

9. Ensemble selon l'une quelconque des revendications 1 à 4, où la structure (11) de positionnement se présente comme une structure alvéolaire (41) entourant le corps central (5), à son contact.

10. Ensemble selon l'une quelconque des revendications 1 à 4, où la structure (11) de positionnement se présente comme un ou plusieurs bourrelets (35) linéaires entourant le corps central (5), à son contact, ou comme des creux (39) formés dans ledit corps.

11. Ensemble selon la revendication 3, seule ou en combinaison avec l'une quelconque des revendications 4 à 10, où les dispositifs (1) sont en ligne les uns derrière les autres.

12. Ensemble selon l'une quelconque des revendications précédentes, qui est un moulage monobloc entre la structure (11) de positionnement et le corps central (5) qui contient le matériau (7) de stockage d'énergie thermique.

13. Ensemble selon l'une quelconque des revendications précédentes, où plusieurs dits dispositifs (1) sont liés ensemble en chapelet par un lien souple (27).

14. Véhicule comprenant l'ensemble selon la revendication 3, seule ou en combinaison avec l'une quelconque des revendications 4 à 12.

15. Procédé de gestion thermique dans un ensemble selon la revendication 1 par lequel
- on fait circuler un fluide (9) dans le volume (3), le long du conduit (15), en échanges thermiques successifs avec les matériaux (7) de stockage d'énergie thermique des corps centraux (5) successifs.

## Patentansprüche

1. Anordnung für die Zirkulation und den Wärmeaustausch mit einem Fluid (9), wobei die Anordnung enthält:
- eine Leitung (15) mit einem Innenraum (3) zur Zirkulation des Fluids, in welchem das Fluid zwischen einem Einlass und einem Auslass zirkulieren kann, wobei die Leitung eine Wand (31) aufweist,
- mehrere Wärmeaustausch- und Positionierungsvorrichtungen (1) in dem Raum (3), wobei jede Vorrichtung in der Leitung angeordnet ist, die von ihrer Wand (31) umgeben ist und ein Material (7) zur Speicherung von Wärmeenergie durch Akkumulation latenter Wärme enthält, das in Wärmeaustausch mit einem zirkulierenden umgebenden Fluid (9) zu bringen ist, wobei mindestens einige der Wärmeaustauschvorrichtungen (1) mit der Wand (31) der Leitung (15) in Kontakt gelangen können,
**dadurch gekennzeichnet, dass** jede Vorrichtung (1) enthält:
- einen zentralen Körper (5), der das Material (7) zur Speicherung von Wärmeenergie durch Akkumulation latenter Wärme enthält, und
- eine Struktur (11; 35, 39, 41) zur Positionierung des zentralen Körpers in dem Raum (3), wobei die Positionierungsstruktur mit dem zentralen Körper, um den herum sie sich erstreckt, verbunden ist und dabei
-- Durchgänge (13, 37, 40) freilässt, die einen Kontakt zwischen dem zentralen Körper (5) und dem Fluid (9) ermöglichen,
-- und einen Abstand sicherstellt, der die Zirkulation des Fluids zwischen den Vorrichtungen ermöglicht.

2. Anordnung für die Zirkulation und den Wärmeaustausch mit einem Fluid nach Anspruch 1,
wobei die Leitung bereichsweise in mehrere Leitungszweige (31a, 31b) unterteilt ist, in denen das Fluid parallel zirkuliert, wobei die Vorrichtungen in den von ihrer Wand umgebenen Leitungszweigen angeordnet sind.

3. Anordnung nach Anspruch 1 oder 2,
wobei es sich bei der Leitung (15) um einen Zufuhrschlauch oder einen der Schläuche handelt, die durch ein Fahrzeug verlaufen.

4. Anordnung nach einem der Ansprüche 1 bis 3,
wobei die Wärmeaustausch- und Positionierungsvorrichtungen (1) in dem Raum (3) einen Strang solcher Vorrichtungen (1) definieren, die in dem Raum (3) aufeinanderfolgen und deren Positionierungsstrukturen (11) zum Positionieren des zentralen Körpers mit der Wand (31) in Kontakt gelangen.

5. Anordnung nach einem der vorangehenden Ansprüche,
wobei die bzw. jede Positionierungsstruktur (11) eine äußere Struktur (17) aufweist, die einen Zylinder (17) definiert und über quer verlaufende Arme (19) mit dem zentralen Körper (5) verbunden ist.

6. Anordnung nach Anspruch 5,
wobei die äußeren Strukturen (17) jeweils voll ausgeführt sind, um jeweils einen Wandabschnitt (310) der Leitung zu definieren, und fluiddicht miteinander verbunden sind.

7. Anordnung nach einem der Ansprüche 1 bis 4,
wobei die Positionierungsstruktur (11) eine äußere Struktur (170) aufweist, die einen Ring definiert und über quer verlaufende Arme (19) mit dem zentralen Körper (5) verbunden ist.

8. Anordnung nach einem der Ansprüche 1 bis 4,
wobei die Positionierungsstruktur (11) eine äußere Struktur (270) aufweist, die:
- eine nicht kontinuierliche Kugel (13) definiert,
- und über quer verlaufende Arme (190) mit dem zentralen Körper (5) verbunden ist.

9. Anordnung nach einem der Ansprüche 1 bis 4,
wobei die Positionierungsstruktur (11) in Form einer Wabenstruktur (41) vorliegt, die den zentralen Körper (5) umgibt und in Kontakt mit diesem steht.

10. Anordnung nach einem der Ansprüche 1 bis 4,
wobei die Positionierungsstruktur (11) in Form einer oder mehrerer linearer Wülste (35), die den zentralen Körper (5) umgeben und in Kontakt mit diesem stehen, oder in Form von Vertiefungen (39), die in dem Körper ausgebildet sind, vorliegt.

11. Anordnung nach Anspruch 3 allein oder in Kombination mit einem der Ansprüche 4 bis 10,
wobei die Vorrichtungen (1) in einer Reihe hintereinanderliegen.

12. Anordnung nach einem der vorangehenden Ansprüche,
wobei es sich um ein einteiliges Formteil zwischen der Positionierungsstruktur (11) und dem zentralen Körper (5) handelt, welches das Material (7) zur Speicherung von Wärmeenergie enthält.

13. Anordnung nach einem der vorangehenden Ansprüche,
wobei mehrere Vorrichtungen (1) durch ein nachgiebiges Verbindungsglied (27) zu einem Strang miteinander verbunden sind.

14. Fahrzeug mit einer Anordnung nach Anspruch 3 allein oder in Kombination mit einem der Ansprüche 4 bis 12.

15. Verfahren zum Wärmemanagement in einer Anordnung nach Anspruch 1, wobei
ein Fluid (9) in dem Raum (3) entlang der Leitung (15) in aufeinanderfolgenden Wärmeaustauschvorgängen mit den Materialien (7) zur Speicherung von Wärmeenergie der aufeinanderfolgenden zentralen Körper (5) zirkuliert.

## Claims

1. A system for circulation and thermal exchange with a fluid (9), the system comprising:
- a pipe (15) having an internal volume (3) for circulating the fluid, in which the fluid can circulate, between an inlet and an outlet, the pipe comprising a wall (31),
- several devices (1) for thermal exchange and positioning in said volume (3), with each device being arranged in said pipe surrounded by its wall (31) and containing a material (7) for storing thermal energy by latent thermal accumulation, to be placed in thermal exchange with the surrounding circulating fluid (9), at least some of said thermal exchange devices (1) being able to come into contact with the wall (31) of the pipe (15),
**characterised in that** each device (1) includes:
- a central body (5) containing said material (7) for storing thermal energy by latent thermal accumulation, and
- a structure (11; 35, 39, 41) for positioning the central body in the volume (3), with the positioning structure being connected to the central body around which it extends:
-- by reserving passages (13, 37, 40) enabling a contact between the central body (5) and the fluid (9),
-- and by ensuring a distance enabling the fluid to flow between the devices.

2. The system for circulation and thermal exchange with a fluid (9) according to claim 1, wherein the pipe (15) is locally divided into several branches (31a, 31b) in which the fluid circulates in parallel the devices (1) for thermal exchange and positioning in said volume (3), with the devices being arranged in said branches surrounded by their walls (31).

3. The system according to claim 1 or 2, wherein the pipe (15) is a hose or one of flexible hoses that run through a vehicle.

4. The system according to any one of claims 1 to 3, wherein the devices (1) for thermal exchange and positioning in said volume (3) define a string of such devices (1) that follow each other in the volume and the central body positioning structures of which (11) come into contact with the wall (31).

5. The system according to any one of the preceding claims, wherein the positioning structure (11) comprises an external structure (17) defining a cylinder (17) and connected by transverse arms (19) to the central body (5).

6. The system according to claim 5, wherein the external structures (11) of the devices are each solid, to define each a portion of a wall (310) of the pipe and are connected to each other in a fluid-tight manner.

7. The system according to any one of claims 1 to 4, wherein the positioning structure (11) comprises an external structure (170) defining a ring and connected by transverse arms (19) to the central body (5).

8. The system according to any one of claims 1 to 4, wherein the positioning structure (11) includes an external structure (270):
- defining a discontinuous sphere (13),
- and connected by transverse arms (190) to the central body (5).

9. The system according to any one of claims 1 to 4, wherein the positioning structure (11) is defined by a cellular structure (41) surrounding the central body (5), in contact with it.

10. The system according to any one of claims 1 to 4, wherein the positioning structure (11) is defined by one or more linear bead(s) (35) surrounding the central body (5), in contact with it, or by recesses (39) formed in said body.

11. The system according to claim 3, alone or in combination with any one of claims 4 to 10, wherein the devices (1) are in line one behind the other.

12. The system according to any one of the preceding claims, which is a one-piece casting including the positioning structure (11) and the central body (5) which contains the thermal energy storage material (7).

13. The system according to any one of the preceding claims, wherein several of said devices (1) are connected together in a string by a flexible link (27).

14. A vehicle comprising the system according to claim 3 alone or in combination with any one of claims 4 to 12.

15. A method for thermal management in a system according to claim 1, wherein a fluid (9) is circulated in the volume (3), along the pipe (15), in successive thermal exchanges with the thermal energy storage materials (7) of the successive central bodies (5).
